# EUROPÄISCHE PATENTANMELDUNG

(11) **EP 4 254 998 A1**
(43) Veröffentlichungstag der Anmeldung: **04.10.2023**
(21) Anmeldenummer: 22165986.5
(22) Anmeldetag: 31.03.2022
(51) Int. Cl.: H04W 4/38, H04L 67/12, H04W 4/70, H04W 84/18

(54) **VERFAHREN ZUM BETRIEB EINES DRAHTLOSKOMMUNIKATIONSSYSTEMS, INSBESONDERE ZUR ÜBERTRAGUNG VON MESSDATEN, SOWIE DRAHTLOSKOMMUNIKATIONSSYSTEM**

(71) Anmelder: Siemens Aktiengesellschaft, 80333 München (DE)
(72) Erfinder: Brehme, Sebastian, 76185 Karlsruhe (DE); Fritz, Viktor, 76187 Karlsruhe (DE); Leist, Felix, 68542 Heddesheim (DE); Warth, Robin, 76676 Graben-Neudorf (DE)
(74) Vertreter: Siemens Patent Attorneys

(57) **Zusammenfassung**

Bei einem Drahtloskommunikationssystems (1), insbesondere zur Übertragung von Messdaten (M), wobei das Drahtloskommunikationssystem (1) mehrere erste Kommunikationsgeräte (P1 - P6) und mehrere zweite Kommunikationsgeräte (C1 - C3) umfasst, ermitteln die zweiten Kommunikationsgeräte (C1 - C3) Empfangsstärken (E) von Signalen, die sie von den ersten Kommunikationsgeräten (P1 - P6) empfangen. Eine Anzahl der ersten Kommunikationsgeräte (P1 - P6) wird einer Anzahl der zweiten Kommunikationsgeräte (C1 - C3) zugeordnet. Die zweiten Kommunikationsgeräte (C1 - C3) stellen nacheinander in zyklischen Wiederholungen, die durch eine Zykluszeit (Z) charakterisiert sind, für eine Kommunikationszeit (K) eine Kommunikationsverbindung mit den ihnen zugeordneten ersten Kommunikationsgeräten (P1 - P6) her. Die Zuordnung der ersten Kommunikationsgeräte (P1 - P6) zu den zweiten Kommunikationsgeräten (C1 - C3) erfolgt dabei in Abhängigkeit von den Empfangsstärken (E), den Zykluszeiten (Z) und den Kommunikationszeiten (K).

Hierdurch kann flexibel und mit niedrigem Aufwand, vorzugsweise automatisiert, eine Zuordnung der ersten Kommunikationsgeräte (P1 - P6) zu den zweiten Kommunikationsgeräten (C1 - C3) erfolgen in Hinblick auf ein oder mehrere Betriebsziele wie z.B. einen möglichst geringen Energieverbrauch der ersten Kommunikationsgeräte (P1 - P6), einer Einbindung einer möglichst großen Zahl von ersten Kommunikationsgeräten (P1 - P6) in das System oder eine möglichst große übertragbare Datenmenge.

## Beschreibung

Die Erfindung betrifft ein Verfahren zum Betrieb eines Drahtloskommunikationssystems, insbesondere zur Übertragung von Messdaten, gemäß Patentanspruch 1 sowie ein Drahtloskommunikationssystem gemäß Patentanspruch 14. Die Erfindung betrifft ferner eine Gerätesteuerung für ein derartiges Drahtloskommunikationssystem gemäß Patentanspruch 15 sowie ein Kommunikationsgerät für ein derartiges Drahtloskommunikationssystem gemäß Patentanspruch 16.

Drahtloskommunikationssysteme nutzen den freien Raum zur Übertragung von analogen und digitalen Signalen mit Hilfe elektromagnetischer Wellen. Der Bereich des genutzten Frequenzbands kann je nach Anwendung und verwendeter Technik von wenigen Hertz (Niederfrequenz) bis hin zu mehreren hundert Terahertz (sichtbares Licht) variieren. Bekannte Beispiele sind Bluetooth, WLAN, ZigBee, NFC, Wibree oder WiMAX im Radiofrequenzbereich sowie IrDA, optischer Richtfunk (FSO) und LiFi im infraroten bzw. optischen Frequenzbereich. Weiterhin zählen hierunter im erweiterten Sinne auch Mobilfunksysteme.

Ein besonderer Anwendungsfall von Drahtloskommunikationssystemen liegt in der Übertragung von Messdaten wie z.B. Temperaturen oder Vibrationen bzw. Beschleunigungen, die beispielsweise in industriellen Anlagen an maschinellen Anlagenkomponenten wie Motoren, Pumpen, Getrieben oder Kompressoren gemessen werden.

Beispiele für derartige industrielle Anlagen sind Anlagen der Prozessindustrie (z.B. chemische Industrie, pharmazeutische Industrie, Anlagen der Petrochemie, Kraftwerke, etc.). Mit Hilfe derartiger Messdaten ist beispielsweise ein Smart Condition Monitoring der Maschinen bzw. der Anlagen möglich.

Als Sensoren kommen dabei beispielsweise robuste Industrial-Internet-of-Things-(IIoT-) Multisensoren zum Einsatz. Diese lassen sich einfach an maschinellen Anlagenkomponenten montieren. Hier sammeln sie wichtige Informationen wie beispielsweise zu Temperaturen und Vibrationen. Diese Messdaten können über das IIoT an eine IIoT-Plattform übertragen werden und dort mittels einer auf Künstlicher Intelligenz (KI) basierten Analyse ausgewertet werden. Alternativ oder ergänzend kann auch bereits vor-Ort in der Anlage eine Analyse oder Vorverarbeitung der Messdaten erfolgen (z.B. mittels eines Edge-Gerätes).

Bei den Sensoren kann es sich auch um Feldgeräte zur Messung von Druck, Temperatur, Füllstand, Durchfluss, etc. handeln.

Die Sensoren sind hierbei entweder autark von einer externen Energieversorgung und werden beispielsweise aus einer Batterie, einem Akkumulator oder Solarzellen gespeist. Die Sensoren können aber auch aus einer externen Energieversorgung gespeist werden, die - beispielsweise aus Gründen des Explosionsschutzes - nur eine sehr geringe elektrische Leistung zur Verfügung stellt. Ein Beispiel hierfür ist eine Stromschleife nach dem 4 bis 20 mA - Standard.

Mit einer mobilen Webapplikation kann sich ein Anlagenbetreiber dann den Zustand der überwachten Maschinen oder Systeme grafisch anzeigen lassen. Abweichungen vom planmäßigen Betriebszustand können somit frühzeitig erkannt und geeignete Gegenmaßnahmen eingeleitet werden, bevor ein Schadensfall unerwartet eintritt. Ein Beispiel für eine derartige Webapplikation ist die Applikation SITRANS SCM IQ der Anmelderin.

Zur Übertragung von Daten wie z.B. Messdaten sind die Sensoren entweder bereits selbst kommunikationsfähig, d.h. sie stellen implizit bereits ein Kommunikationsgerät dar, oder sie sind mit einem Kommunikationsgerät gekoppelt. Dieses Kommunikationsgerät wird im Folgenden als "erstes" Kommunikationsgerät bezeichnet.

Ein Sammeln von Daten mehrerer Sensoren für eine Übertragung über das IIoT an eine IIoT-Plattform oder zur Bereitstellung für eine Analyse und/oder Vorverarbeitung lokal vor-Ort in der Anlage erfolgt dabei vorzugsweise drahtlos mittels eines Gateways oder Access Points.

Da die Sensoren nur eine begrenzte Energie zur Verfügung haben bzw. zur Verfügung stellen können, muss der Energieverbrauch in den Sensoren bzw. den ersten Kommunikationsgeräten für die Messung und Datenübertragung möglichst geringgehalten werden. Für einen energiesparenden Betrieb der Sensoren befinden sich diese vorzugsweise in der Regel in einem Leerlauf-Modus (idle mode) und warten darauf, dass ein zweites Kommunikationsgerät, das beispielsweise bereits selbst eine Gateway-Funktion für das Internet bereitstellt oder mit einem Gateway gekoppelt ist, eine Verbindung mit ihm herstellt.

Der Sensor bzw. das erste Kommunikationsgerät versendet hierzu in dem Leerlauf-Modus Lebens-Daten, vorzugsweise in festen Zeitintervallen, z.B. alle 2 Sekunden. Das zweite Kommunikationsgerät empfängt die Lebens-Daten und kann dann eine Verbindung zu dem Sensor herstellen (d.h. eine Verbindung aufbauen, halten und auch wieder beenden). Nach erfolgreicher Herstellung der Verbindung sendet das zweite Kommunikationsgerät einen Messbefehl an das erste Kommunikationsgerät bzw. den Sensor und der Sensor startet die Messung. Nach Abschluss der Messung sendet das erste Kommunikationsgerät bzw. der Sensor die Messdaten an das zweite Kommunikationsgerät. Das zweite Kommunikationsgerät empfängt diese Daten und beendet bzw. schließt dann die Verbindung zu dem ersten Kommunikationsgerät bzw. Sensor.

In einer Anlage können dabei mehrere erste Kommunikationsgeräte und mehrere zweite Kommunikationsgeräte vorhanden sein. Die ersten Kommunikationsgeräte bzw. Sensoren können dabei vorzugsweise selbst keine Verbindung zu dem (den) zweiten Kommunikationsgerät(en) aufbauen. Die ersten Kommunikationsgeräte bzw. die Sensoren können vorzugsweise zu einem bestimmten Zeitpunkt auch mit nur jeweils einem einzigen zweiten Kommunikationsgerät verbunden sein und ein zweites Kommunikationsgerät kann umgekehrt zu einem bestimmten Zeitpunkt nur eine Verbindung zu einem einzigen ersten Kommunikationsgerät bzw. Sensor herstellen. Die zweiten Kommunikationsgeräte können über der Zeit jedoch nacheinander Verbindungen zu mehreren ersten Kommunikationsgeräten bzw. Sensoren aufbauen. Hierdurch kann der Energieverbrauch auf Seite der ersten Kommunikationsgeräte bzw. Sensoren niedrig gehalten werden.

Ein Beispiel für einen Drahtloskommunikations-Standard mit geringem Energieverbrauch nach diesem Verfahren ist der Bluetooth Low Energy (BLE)-Standard. Bei den ersten Kommunikationsgeräten handelt es sich dann um sogenannte "periphere"-oder "Slave" bzw. "Client"-Bluetooth-Geräte und bei den zweiten Kommunikationsgeräten um sogenannte "zentrale"- oder "Master"-Bluetooth-Geräte gemäß dieses Standards. Die zweiten Kommunikationsgeräte können beispielsweise als BLE-"Access Points" ausgebildet sein. Die vorstehend erwähnten Lebens-Daten werden beim BLE-Standard als "Aufmerksamkeits-Daten" ("Advertisement"-Data) bezeichnet.

Wenn mehrere erste Kommunikationsgeräte und mehrere zweite Kommunikationsgeräte vorhanden sind, müssen die ersten Kommunikationsgeräte den zweiten Kommunikationsgeräten zur Kommunikation zugeordnet werden. Hierfür kann beispielsweise eine spezielle Gerätesteuerung vorgesehen sein, mittels der ein Betreiber des Kommunikationssystems oder ein Anlagenbetreiber diese Zuordnungen vornimmt. Diese Zuordnung und auch eine spätere Anpassung an sich ändernde Systembedingungen wie z.B. physikalische Hindernisse in den Übertragungswegen oder eine sich ändernde Anzahl von ersten und/oder zweiten Kommunikationsgeräten ist aber mit viel Aufwand und verbunden. Oftmals ist diese Zuordnung auch nicht optimal in Hinblick auf ein Betriebsziel wie z.B. einen möglichst niedrigen Energieverbrauch der ersten Kommunikationsgeräte, einer Einbindung einer maximalen Zahl von ersten Kommunikationsgeräten und/oder einer maximal übertragbaren Datenmenge.

Aus der US 2019/0349831 A1 ist ein drahtloses Roaming-Verfahren zur Zuordnung von Client-Bluetooth-Geräten zu Access-Points bekannt, bei dem die Access-Points die Empfangsstärken von Signalen der Client-Bluetooth-Geräte ermitteln. Im Fall, dass ein Access Point eine Verbindung zu einem Client-Bluetooth-Geräten hergestellt hat und eine Empfangsstärke unterhalb eines spezifizierten Schwellwertes ermittelt, wird automatisch die Verbindung beendet. Der Access Point sendet daraufhin eine Information über den Verbindungsabbau an einen zentralen Access-Controller, der wiederum alle anderen Access Points über den Verbindungsabbau informiert. Anschließend ermitteln alle anderen Access Points die Empfangsstärke von Signalen des Client-Bluetooth-Gerätes. Der Access Point mit der größten Empfangsstärke von Signalen des Client-Bluetooth-Gerätes stellt dann eine Verbindung mit diesem Gerät her.

Die CN 111629451 A offenbart eine Lösung zur Vermeidung von Verbindungsfehlern. Bei dieser Lösung ist ein Slave-Knoten stets gleichzeitig mit zwei Master-Knoten verbunden. Wenn eine Verbindung zu einem der Master-Knoten ausfällt, besteht weiterhin eine Verbindung zu dem anderen der zwei Master-Knoten. Wenn die Empfangsstärke von Signalen zu einem der Master-Knoten unter einen definierten Schwellwert fällt, dann sucht der Slave-Knoten automatisch nach einem anderen Master-Knoten in Reichweite und verbindet sich mit dem Master-Knoten mit der höchsten Empfangsstärke. Somit bestehen anschließend wieder Verbindungen zu zwei Master-Knoten.

Im Fall der CN 112 969 167 A sucht ein Bluetooth-Gerät nach Ziel-Geräten in Reichweite und ermittelt die zwei Ziel-Geräte mit der höchsten Empfangsstärke. Danach wird eine Verbindung zu einem der beiden Target-Geräte hergestellt. Im Fall von Verbindungsproblemen oder eines Abfalls der Empfangsstärke unterhalb eine Schwellwertes, wechselt das Bluetooth-Gerät automatisch zu dem anderen Ziel-Gerät.

Allerdings sind diese Verfahren für verschiedenste Betriebsziele oder in Hinblick auf eine Anpassbarkeit an sich ändernden Systembedingungen nur eingeschränkt geeignet. Insbesondere sind sie wegen eines hohen Energieverbrauchs auf Seite der Client- oder Slave-Geräte nur eingeschränkt oder überhaupt nicht für eine Übertragung von Daten von energieautarken Geräten oder von Geräten mit begrenzter Energieversorgung, wie z.B. Messdaten von energieautarken Sensoren, geeignet.

Es besteht deshalb der Bedarf nach einem Verfahren zum Betrieb eines Drahtloskommunikationssystem, bei dem mit niedrigem Aufwand, vorzugsweise automatisierbar, eine Zuordnung der ersten Kommunikationsgeräte zu den zweiten Kommunikationsgeräten erfolgen kann in Hinblick auf ein oder mehrere Betriebsziele wie z.B. einen möglichst geringen Energieverbrauch der ersten Kommunikationsgeräte, eine Einbindung einer möglichst großen Zahl von ersten Kommunikationsgeräten in das System oder eine möglichst große übertragbare Datenmenge. Insbesondere soll auch eine flexible Anpassung des Systems an sich ändernde Systembedingungen wie z.B. physikalische Hindernisse in den Übertragungswegen oder einer sich ändernden Anzahl von ersten und/oder zweiten Kommunikationsgeräten ermöglicht werden.

Die Lösung dieser Aufgabe gelingt durch ein Verfahren gemäß Anspruch 1 und ein Drahtloskommunikationssystem gemäß Anspruch 14. Eine Gerätesteuerung für ein derartiges Drahtloskommunikationssystem ist Gegenstand des Patentanspruchs 15 und ein Kommunikationsgerät für ein derartiges Drahtloskommunikationssystem ist Gegenstand des Patentanspruchs 16. Vorteilhafte Ausgestaltungen sind jeweils Gegenstand der Unteransprüche.

Bei dem erfindungsgemäßen Verfahren zum Betrieb eines Drahtloskommunikationssystems, insbesondere zur Übertragung von Messdaten, wobei das Drahtloskommunikationssystem mehrere erste Kommunikationsgeräte und mehrere zweite Kommunikationsgeräte umfasst, ermitteln die zweiten Kommunikationsgeräte Empfangsstärken von Signalen, die sie von den ersten Kommunikationsgeräten empfangen. Eine Anzahl der ersten Kommunikationsgeräte wird einer Anzahl der zweiten Kommunikationsgeräte zugeordnet. Die zweiten Kommunikationsgeräte stellen nacheinander in zyklischen Wiederholungen, die durch eine Zykluszeit charakterisiert sind, für eine Kommunikationszeit eine Kommunikationsverbindung mit den ihnen zugeordneten ersten Kommunikationsgeräten her. Erfindungsgemäß erfolgt dabei die Zuordnung der ersten Kommunikationsgeräte zu den zweiten Kommunikationsgeräten in Abhängigkeit von den Empfangsstärken, den Zykluszeiten und den Kommunikationszeiten.

Da die Kommunikationsverbindungen von den zweiten Kommunikationsgeräten zu den ersten Kommunikationsgeräten dabei nicht dauerhaft, sondern nur in zyklischen Abständen erfolgen, können die ersten Kommunikationsgeräte außerhalb ihrer Kommunikationszeiten in einem Leerlauf betrieben werden, in dem ihr Energieverbrauch reduziert ist.

Die Kommunikationszeiten berücksichtigen dabei von Vorteil die Zeiten für den Auf- und Abbau einer Verbindung und die benötigte Zeit für eine Datenübertragung, z.B. Übertragung von Messdaten. Die Kommunikationszeiten können dabei auch unterschiedlich für unterschiedliche erste Kommunikationsgeräte sein.

Anhand der Zykluszeiten ist abhängig von der weiteren Verwendung der übertragenen Daten eine Häufigkeit der Datenübertragung von den ersten Kommunikationsgeräten zu den zweiten Kommunikationsgeräten einstellbar. Je größer beispielsweise - bei gleichbleibender Kommunikationszeit - die Zykluszeit ist, desto geringer ist zwar die übertragbare Datenmenge, desto geringer ist aber auch der Energieverbrauch auf Seite des ersten Kommunikationsgerätes, und umgekehrt. Die Zykluszeiten können dabei auch unterschiedlich für unterschiedliche zweite Kommunikationsgeräte sein.

Anhand der Zykluszeiten und der Kommunikationszeiten kann ermittelt werden, zu wie vielen ersten Kommunikationsgeräten ein zweites Kommunikationsgerät innerhalb eines Zyklus überhaupt eine Verbindung herstellen kann. Die Kommunikationszeiten sind wiederum abhängig von der Qualität der Datenübertragung bzw. den pro Zeiteinheit übertragbaren Datenmengen. Als Indikator für die Qualität der Datenübertragung dienen die Empfangsstärken. Je höher beispielsweise die Empfangsstärke von Signalen eines ersten Kommunikationsgerätes an einem zweiten Kommunikationsgerät ist, umso kürzer kann bei gleicher zu übertragender Datenmenge die Kommunikationszeit und somit der Energieverbrauch des ersten Kommunikationsgerätes gehalten werden, und umgekehrt.

Anhand der Parameter Empfangsstärken, Zykluszeiten und Kommunikationszeiten ist nun eine effiziente und zuverlässige Zuordnung der ersten Kommunikationsgeräte zu den zweiten Kommunikationsgeräten zur Erzielung eines optimierten Betriebszustandes möglich. Eine Optimierung kann beispielsweise in Hinblick auf eine Zuordnung einer maximalen Anzahl von ersten Kommunikationsgeräten zu zweiten Kommunikationsgeräte, einen minimalen Energieverbrauch der ersten Kommunikationsgeräte, einer maximal von den ersten an die zweiten Kommunikationsgeräte übertragbaren Datenmenge, oder eine Kombination von zwei oder mehreren solcher Optimierungsziele erfolgen. Anhand dieser Parameter kann flexibel auch bei sich ändernden Systembedingungen wie z.B. physikalische Hindernissen in den Übertragungswegen, Änderungen von Positionen von Kommunikationsgeräten oder bei einer sich ändernden Anzahl von ersten und/oder zweiten Kommunikationsgeräten eine Überprüfung der Zuordnungen und bei Bedarf eine Neuzuordnung der ersten Kommunikationsgeräte zu den zweiten Kommunikationsgeräten und/oder eine Änderung der Zykluszeiten und/oder Kommunikationszeiten in Hinblick auf eines oder mehrere der Optimierungsziele erfolgen.

Die Zuordnungen bzw. Anpassungen des Systems in Hinblick auf einen optimalen Betriebszustand erfolgen vorzugsweise zumindest teilweise automatisch, besonders vorteilhaft vollständig automatisch.

Alternativ können einem Betreiber des Drahtloskommunikationssystems auch Empfehlungen zur Anpassung des Systems zur Erreichung eines oder mehrerer der Optimierungsziele gegeben werden, beispielsweise zur Änderung von Zykluszeiten, Positionen von Kommunikationsgeräten, Änderung einer Anzahl von Kommunikationsgeräten oder zur Entfernung physikalischer Hindernisse in den Übertragungswegen.

Gemäß einer vorteilhaften Ausgestaltung des erfindungsgemäßen Verfahrens wird ein erstes Kommunikationsgerät nur genau einem einzigen zweiten Kommunikationsgerät zugeordnet. Das bedeutet, dass nur von einem einzigen zweiten Kommunikationsgerät eine Verbindung zu dem ersten Kommunikationsgerät aufgebaut wird. Da das erste Kommunikationsgerät somit nur Energie für eine einzige Kommunikationsverbindung benötigt, kann dessen Energieverbrauch besonders geringgehalten werden.

Gemäß einer vorteilhaften Ausgestaltung des erfindungsgemäßen Verfahrens erfolgt die Zuordnung derart, dass eine maximale Anzahl der ersten Kommunikationsgeräte den zweiten Kommunikationsgeräten zugeordnet wird, wobei bei den zweiten Kommunikationsgeräten eine Summe der Kommunikationszeiten mit den jeweils zugordneten ersten Kommunikationsgeräten innerhalb eines Zyklus aber nicht größer ist als deren jeweilige Zykluszeit. Es wird somit sichergestellt, dass die Kommunikationskapazität auf Seite des zweiten Kommunikationsgerätes nicht überschritten wird.

Wenn eines der ersten Kommunikationsgeräte zu mehreren der zweiten Kommunikationsgerät zuordenbar ist, dann erfolgt die Zuordnung vorzugsweise zu demjenigen der zweiten Kommunikationsgeräte, welches die größte Empfangsstärke der von dem ersten Kommunikationsgerät empfangenen Signale ermittelt. Hierdurch kann der Energieverbrauch des ersten Kommunikationsgerätes reduziert werden.

Gemäß einer weiteren vorteilhaften Ausgestaltung erfolgt, vorzugsweise automatisch, eine Überprüfung der Zuordnungen, wenn sich die Anzahl der Kommunikationsgeräte ändert, d.h. wenn dem Kommunikationssystem erste Kommunikationsgeräte und/oder zweite Kommunikationsgeräte hinzugefügt oder aus ihm entfernt werden. Eine Änderung der Anzahl von ersten Kommunikationsgeräten kann beispielsweise anhand von Lebens-Daten festgestellt werden. Wenn bei der Überprüfung festgestellt wird, dass eines der Optimierungsziele nicht mehr erreicht ist, dann kann eine Neuzuordnung oder eine Anpassung von Kommunikations- oder Zykluszeiten erfolgen.

Gemäß einer weiteren vorteilhaften Ausgestaltung erfolgt, vorzugsweise automatisch, eine Überprüfung der Zuordnungen im Fall einer Änderung einer Empfangsstärke an einem der zweiten Kommunikationsgeräte, z.B. aufgrund einer Änderung einer Position des ersten Kommunikationsgerätes oder aufgrund eines physikalischen Hindernisses in einem Übertragungsweg von dem ersten zu dem zweiten Kommunikationsgerät. Es kann dann bei Bedarf eine Neuzuordnung der ersten Kommunikationsgeräte oder eine Anpassung von Kommunikations- oder Zykluszeiten erfolgen.

Weiterhin erfolgt von Vorteil eine Überprüfung der Zuordnungen dann, wenn sich eine der Zykluszeiten und/oder eine der Kommunikationszeiten ändert. Es kann dann bei Bedarf eine Neuzuordnung der ersten Kommunikationsgeräte erfolgen.

Wenn eines der ersten Kommunikationsgeräte nicht zu einem der zweiten Kommunikationsgeräte zuordenbar ist, wird von Vorteil eine Information erzeugt, z.B. für einen Betreiber des Drahtloskommunikationssystems. Dieser kann dann geeignete Gegenmaßnahmen einleiten, wie z.B. eine Installation eines zusätzlichen zweiten Kommunikationsgeräts.

Gemäß einer relativ einfach realisierbaren Ausgestaltung erfolgen die Zuordnungen durch eine zentrale Gerätesteuerung.

Die zentrale Gerätesteuerung kann dann die ermittelten Empfangsstärken von den zweiten Kommunikationsgeräten empfangen. Die Zykluszeiten und die Kommunikationszeiten können beispielsweise über eine externe Schnittstelle, z.B. von einem Betreiber des Kommunikationssystems, empfangen werden.

Die zentrale Gerätesteuerung kann den zweiten Kommunikationsgeräten dann die jeweils zugeordneten ersten Kommunikationsgeräten mitteilen. Die zweiten Kommunikationsgeräte können diese Information nutzen, indem sie nur zu den jeweils zugeordneten ersten Kommunikationsgeräten eine Verbindung herstellen.

Aufgrund der zyklischen Abfrage von Daten von den ersten Kommunikationsgeräten eignet sich das erfindungsgemäße Verfahren vor allem für ein Drahtloskommunikationssystem zur Übertragung von Messdaten.

Die ersten Kommunikationsgeräte sind dann bevorzugt als Sensoren zur Erfassung von Messdaten ausgebildet (d.h. als kommunikationsfähige Sensoren) oder mit diesen gekoppelt.

Ein erfindungsgemäßes Drahtloskommunikationssystem, insbesondere zur Übertragung von Messdaten, umfasst mehrere erste Kommunikationsgeräte, mehrere zweite Kommunikationsgeräte und eine Gerätesteuerung,
- wobei die Gerätesteuerung ausgebildet ist, eine Anzahl der ersten Kommunikationsgeräte einer Anzahl der zweiten Kommunikationsgeräte zuzuordnen, vorzugweise derart, dass ein erstes Kommunikationsgerät nur genau einem einzigen zweiten Kommunikationsgerät zugeordnet ist,
- wobei die zweiten Kommunikationsgeräte ausgebildet sind,
   - nacheinander in zyklischen Wiederholungen, die durch eine Zykluszeit charakterisiert sind, für eine Kommunikationszeit eine Kommunikationsverbindung mit den jeweils zugordneten ersten Kommunikationsgeräten herzustellen,
   - Empfangsstärken von Signalen zu ermitteln, die sie von den ersten Kommunikationsgeräten empfangen,
- wobei die Gerätesteuerung weiterhin derart ausgebildet ist, dass die Zuordnung der ersten Kommunikationsgeräte zu den zweiten Kommunikationsgeräten in Abhängigkeit von den Empfangsstärken, den Zykluszeiten und den Kommunikationszeiten erfolgt.

Eine erfindungsgemäße Gerätesteuerung ist geeignet für ein Drahtloskommunikationssystem, insbesondere zur Übertragung von Messdaten, welches mehrere erste Kommunikationsgeräte und mehrere zweite Kommunikationsgeräte umfasst,
wobei die zweiten Kommunikationsgeräte ausgebildet sind,
- nacheinander in zyklischen Wiederholungen, die durch eine Zykluszeit charakterisiert sind, für eine Kommunikationszeit eine Kommunikationsverbindung mit ihnen zugeordneten ersten Kommunikationsgeräten herzustellen und
- Empfangsstärken von Signalen zu ermitteln, die sie von den ersten Kommunikationsgeräten empfangen.

Erfindungsgemäß weist die Gerätesteuerung eine Schnittstelle zur Kommunikation mit den zweiten Kommunikationsgeräten aufweist und ist ausgebildet,
- über die Schnittstelle die Empfangsstärken von den zweiten Kommunikationsgeräten zu empfangen,
- eine Anzahl der ersten Kommunikationsgeräte einer Anzahl der zweiten Kommunikationsgeräte zuzuordnen, vorzugweise derart, dass ein erstes Kommunikationsgerät nur genau einem einzigen zweiten Kommunikationsgerät zugeordnet ist,
- wobei die Zuordnung der ersten Kommunikationsgeräte zu den zweiten Kommunikationsgeräten in Abhängigkeit von den empfangenen Empfangsstärken, den Zykluszeiten und den Kommunikationszeiten erfolgt,
- den zweiten Kommunikationsgeräten über die Schnittstelle eine Information über die ihnen jeweils zugeordneten ersten Kommunikationsgeräte auszugeben.

Ein erfindungsgemäßes Kommunikationsgerät für ein Drahtloskommunikationssystem, insbesondere zur Übertragung von Messdaten, ist ausgebildet, Signale von anderen Kommunikationsgeräten zu empfangen und Empfangsstärken dieser Signale zu ermitteln,
wobei es eine Schnittstelle aufweist zur Ausgabe der Empfangsstärken an eine Gerätesteuerung und zum Empfang einer Zykluszeit, einer Zuordnung von anderen Kommunikationsgeräten zu dem Kommunikationsgerät und zu Kommunikationszeiten mit den anderen Kommunikationsgeräten,
und wobei es ausgebildet ist,
   - nacheinander in zyklischen Wiederholungen, die durch eine Zykluszeit charakterisiert sind, für eine Kommunikationszeit eine Kommunikationsverbindung mit den zugeordneten anderen Kommunikationsgeräten herzustellen.

Die für das erfindungsgemäße Verfahren genannten Vorteile gelten entsprechend für das erfindungsgemäße Drahtloskommunikationssystem, die erfindungsgemäße Gerätesteuerung und das erfindungsgemäße Kommunikationsgerät.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert; darin zeigen:
- FIG 1: eine Prinzipdarstellung eines erfindungsgemäßen Datenkommunikationssystems in einem Anfangszustand ohne zugeordnete erste Kommunikationsgeräte,
- FIG 2: einen Verfahrensablauf zur Zuordnung der ersten Kommunikationsgeräte von FIG 1 zu zweiten Kommunikationsgeräten,
- FIG 3: das Datenkommunikationssystems von FIG 1 mit zugeordneten ersten Kommunikationsgeräten,
- FIG 4: das Datenkommunikationssystems von FIG 3 mit einem zusätzlichen ersten Kommunikationsgerät,
- FIG 5: das Datenkommunikationssystems von FIG 4 mit einem weiteren zusätzlichen ersten Kommunikationsgerät,
- FIG 6: das Datenkommunikationssystems von FIG 3 mit einem zusätzlichen zweiten Kommunikationsgerät und
- FIG 7: das Datenkommunikationssystems von FIG 3 bei geänderter Zykluszeit.

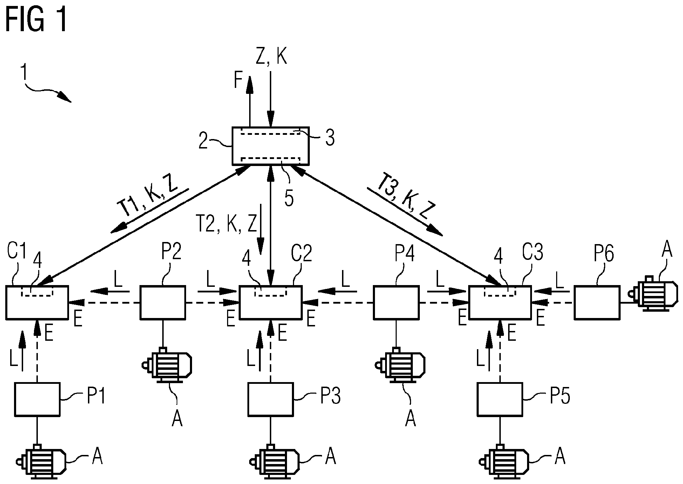

FIG 1 zeigt in einer Prinzipdarstellung ein erfindungsgemäßes Datenkommunikationssystem 1 in einem Anfangszustand. Das Datenkommunikationssystems 1 umfasst sechs erste Kommunikationsgeräte P1 - P6, drei zweite Kommunikationsgeräte C1 - C3 und eine zentrale Gerätesteuerung 2.

Die ersten Kommunikationsgeräte P1 - P6 sind als energieautarke Geräte oder Geräte mit niedriger Energiezufuhr ausgebildet oder sind zur Energieversorgung mit derartigen Geräten gekoppelt. Insbesondere handelt es sich bei den ersten Kommunikationsgeräten P1 - P6 um energieautarke Sensoren, insbesondere zur Messung von Temperaturen und Vibrationen bzw. Beschleunigungen an rotierenden Maschinen A.

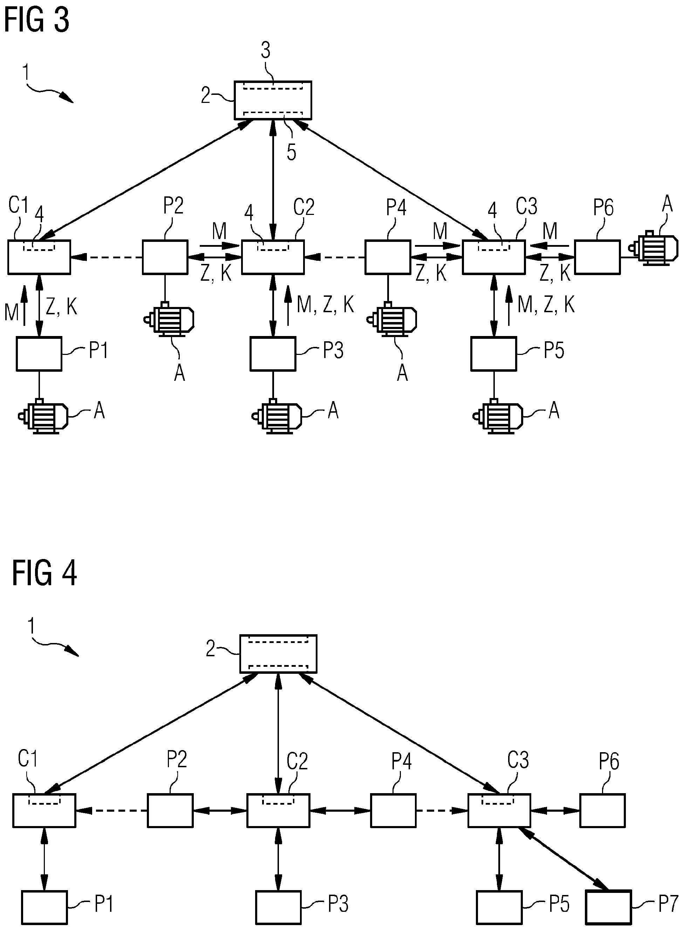

Beim späteren Betrieb (siehe FIG 3) werden von den ersten Kommunikationsgeräten P1 - P6 erfasste Messdaten an die zweiten Kommunikationsgeräte C1 - C3 und von dort weiter beispielsweise über das IIoT an eine IIoT-Plattform übertragen und dort mittels einer auf Künstlicher Intelligenz (KI) basierten Analyse ausgewertet. Alternativ oder ergänzend kann auch bereits vor-Ort in der Anlage bzw. bei den rotierenden Maschinen A eine Analyse oder Vorverarbeitung der Messdaten erfolgen (z.B. mittels eines Edge-Gerätes). Die zweiten Kommunikationsgeräte C1 - C3 sind hierzu mit einem Gateway oder einem Edge-Gerät verbunden. Beispielsweise kann die Gerätesteuerung 2 die Funktion eines derartigen Gateways oder Edge-Gerätes ausführen.

Zur Datenübertragung zwischen den ersten Kommunikationsgeräten P1 - P6 und den zweiten Kommunikationsgeräten C1 - C3 kommt vorzugsweise ein Drahtloskommunikations-Standard mit geringem Energieverbrauch wie der Bluetooth Low Energy (BLE)-Standard zur Anwendung. Bei den ersten Kommunikationsgeräten handelt P1 - P6 es sich dann um sogenannte "periphere"- oder "Slave" bzw. "Client"-Bluetooth-Geräte und bei den zweiten Kommunikationsgeräten C1 - C3 um so genannte "zentrale"- oder "Master"-Bluetooth-Geräte gemäß dieses Standards. Die zweiten Kommunikationsgeräte können beispielsweise als BLE-"Access Points" ausgebildet sein.

Da die ersten Kommunikationsgeräte P1 - P6 nur eine begrenzte Energie zur Verfügung haben, muss ihr Energieverbrauch für die Messung und Datenübertragung möglichst geringgehalten werden. Für einen energiesparenden Betrieb der ersten Kommunikationsgeräte P1 - P6 befinden sich diese in der Regel in einem Leerlauf-Modus (idle mode) und warten darauf, dass eines der zweiten Kommunikationsgeräte C1 - C3 eine Verbindung mit ihnen herstellt.

Die ersten Kommunikationsgeräte P1 - P6 versenden hierzu in dem Leerlauf-Modus Lebens-Daten L, vorzugsweise in festen Zeitintervallen, z.B. alle 2 Sekunden. Beim BLE-Standard werden diese Lebens-Daten als "Aufmerksamkeits-Daten" ("Advertisement"-Data) bezeichnet. Die zweiten Kommunikationsgeräte C1 - C3 empfangen die Lebens-Daten L und können dann eine Verbindung zu den ersten Kommunikationsgeräten P1 - P6 herstellen (d.h. eine Verbindung aufbauen, halten und auch wieder beenden) (siehe FIG 3).

Wenn ein zweites Kommunikationsgerät C1 - C3 erfolgreich eine Verbindung zu einem der ersten Kommunikationsgeräte P1 - P6 hergestellt hat, sendet es einen Messbefehl an dieses erste Kommunikationsgerät und das erste Kommunikationsgerät bzw. der Sensor startet die Messung. Nach Abschluss der Messung sendet das erste Kommunikationsgerät die Messdaten M an das zweite Kommunikationsgerät (siehe FIG 3). Das zweite Kommunikationsgerät empfängt die Messdaten M und beendet bzw. schließt dann die Verbindung zu dem ersten Kommunikationsgerät bzw. Sensor.

Jedes der zweiten Kommunikationsgeräte C1 - C3 ist hierbei ausgebildet, nacheinander in zyklischen Wiederholungen, die durch eine Zykluszeit Z charakterisiert sind, für eine Kommunikationszeit K eine Kommunikationsverbindung mit ersten Kommunikationsgeräten herzustellen, die dem jeweiligen zweiten Kommunikationsgerät zugeordnet sind. Anhand der Zykluszeiten ist abhängig von der weiteren Verwendung der übertragenen Daten eine Häufigkeit der Datenübertragung von den ersten Kommunikationsgeräten P1 - P6 zu den zweiten Kommunikationsgeräten C1 - C3 einstellbar. Je größer beispielsweise - bei gleichbleibender Kommunikationszeit - die Zykluszeit ist, desto geringer ist zwar die übertragbare Datenmenge, desto geringer ist aber auch der Energieverbrauch auf Seite des ersten Kommunikationsgerätes, und umgekehrt.

Weiterhin ist jedes der zweiten Kommunikationsgeräte C1 - C3 ausgebildet, Empfangsstärken E von Signalen, zum Beispiel der Signale mit den Lebensdaten L, zu ermitteln, die sie von den ersten Kommunikationsgeräten P1 - P6 empfangen.

Für die Zuordnung der ersten Kommunikationsgeräte P1 - P6 zu den zweiten Kommunikationsgeräten C1 - C3 ist die Gerätesteuerung 2 zuständig.

Die Gerätesteuerung 2 ist ausgebildet, eine Anzahl der ersten Kommunikationsgeräte P1 - P6 einer Anzahl der zweiten Kommunikationsgeräte C1 - C3 zuzuordnen, und zwar derart, dass ein erstes Kommunikationsgerät nur genau einem einzigen zweiten Kommunikationsgerät zugeordnet ist. Hierdurch kann der Energieverbrauch der ersten Kommunikationsgeräte niedrig gehalten werden.

Die Gerätesteuerung 2 ist dabei derart ausgebildet, dass die Zuordnung der ersten Kommunikationsgeräte zu den zweiten Kommunikationsgeräten in Abhängigkeit von den Empfangsstärken E, den Zykluszeiten Z und den Kommunikationszeiten K erfolgt.

Anhand der Zykluszeiten Z und der Kommunikationszeiten K kann die Gerätesteuerung 2 ermitteln, zu wie vielen ersten Kommunikationsgeräten P1 - P6 ein zweites Kommunikationsgerät C1 - C3 innerhalb eines Zyklus überhaupt eine Verbindung herstellen kann. Die Kommunikationszeiten K sind wiederum abhängig von der Qualität der Datenübertragung bzw. den pro Zeiteinheit zu übertragenden Datenmengen. Als Indikator für die Qualität der Datenübertragung dienen die Empfangsstärken E. Je höher beispielsweise die Empfangsstärke E von Signalen eines ersten Kommunikationsgerätes an einem zweiten Kommunikationsgerät ist, umso kürzer kann bei gleicher zu übertragender Datenmenge die Kommunikationszeit K und somit der Energieverbrauch des ersten Kommunikationsgerätes gehalten werden, und umgekehrt.

Anhand der Parameter Empfangsstärken E, Zykluszeiten Z und Kommunikationszeiten K ist nun eine effiziente und zuverlässige Zuordnung der ersten Kommunikationsgeräte P1 - P6 zu den zweiten Kommunikationsgeräten C1 - C3 mit dem Ziel der Herstellung eines optimierten Betriebszustandes möglich. Eine Optimierung kann beispielsweise in Hinblick auf einen minimalen Energieverbrauch der ersten Kommunikationsgeräte, einer Zuordnung einer maximalen Anzahl von ersten Kommunikationsgeräten zu zweiten Kommunikationsgeräten, einer maximal von den ersten an die zweiten Kommunikationsgeräte übertragbaren Datenmenge, oder eine Kombination von zwei oder mehreren solcher Optimierungsziele erfolgen. Anhand dieser Parameter kann flexibel auch bei sich ändernden Systembedingungen wie z.B. physikalische Hindernissen in den Übertragungswegen, Änderungen von Positionen von Kommunikationsgeräten oder bei einer sich ändernden Anzahl von ersten und/oder zweiten Kommunikationsgeräten automatisch eine Änderung des Betriebszustandes, ggf. verbunden mit einer Neuzuordnung der ersten Kommunikationsgeräte zu den zweiten Kommunikationsgeräten und/oder einer Änderung der Zykluszeit Z und/oder der Kommunikationszeit K, in Hinblick auf eines oder mehrere der Optimierungsziele erfolgen.

In einem in FIG 1 gezeigten Anfangszustand des Datenkommunikationssystems 1 sind die ersten Kommunikationsgeräte P1 - P6 noch nicht den zweiten Kommunikationsgeräten C1 - C3 zugeordnet, was durch strichlierte Linien zwischen ersten und zweiten Kommunikationsgeräten angedeutet ist. Wo zwischen zwei Kommunikationsgeräten eine strichlierte Linie verläuft, liegen die beiden Kommunikationsgeräte innerhalb einer Empfangsreichweite. Wo keine Linie vorhanden ist, liegen die beiden Geräte außerhalb der Empfangsreichweite. Die Länge der Linie gibt dabei einen Hinweis auf die Entfernung der beiden Geräte zueinander und somit auch auf die Empfangsstärken von Signalen, die vom jeweiligen zweiten Kommunikationsgerät empfangen werden. Je länger der Pfeil, desto größer die Entfernung und desto kleiner die Empfangsstärke.

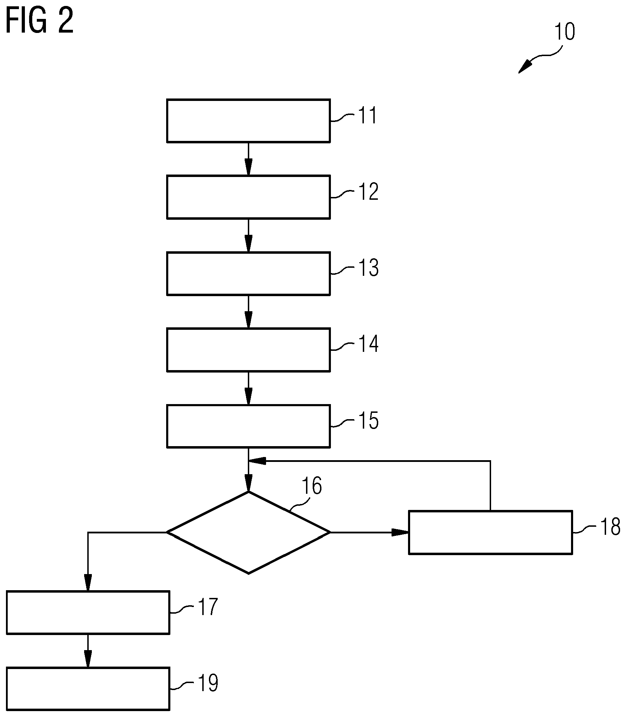

Es kommt dann zu einem anhand FIG 2 erläuterten Verfahrensablauf 10:
In einem ersten Schritt 11 versenden die ersten Kommunikationsgeräte P1 - P6 Lebensdaten L an ihre Umgebung.

In einem zweiten Schritt 12 scannen die zweiten Kommunikationsgeräte C1 - C3 ihre Umgebung nach Empfang von Lebensdaten von ersten Kommunikationsgeräten P1 - P6 ab. Wenn sie Lebensdaten eines ersten Kommunikationsgerätes empfangen, ermitteln sie die Empfangsstärke E der empfangenen Signale und übergeben eine mit den Lebensdaten erhaltene Information, die das erste Kommunikationsgerät eindeutig identifiziert, und die zugehörige Empfangsstärke E über eine Schnittstelle 4 an die Gerätesteuerung 2. In dem Beispiel von FIG 1 empfängt das zweite Kommunikationsgerät C1 Lebensdaten L der ersten Kommunikationsgeräte P1 und P2, das zweite Kommunikationsgerät C2 empfängt Lebensdaten L der ersten Kommunikationsgeräte P2, P3, P4 und das zweite Kommunikationsgerät C3 empfängt Lebensdaten L der ersten Kommunikationsgeräte P4, P5, P6.

Die Gerätesteuerung 2 sammelt in einem dritten Schritt 13 für eine definierte Zeit die von den zweiten Kommunikationsgeräten C1 - C3 erhaltenen Identifikationen und Empfangsstärken von ersten Kommunikationsgeräten, hier der ersten Kommunikationsgeräten P1 - P6.

Die Gerätesteuerung 2 ermittelt dann in einem Schritt 14 für jedes der zentralen Kommunikationsgeräte aus dessen Zykluszeit Z und Kommunikationszeit K die maximale Anzahl von ersten Kommunikationsgeräten, zu denen während eines Zyklus überhaupt eine Verbindung herstellbar ist. Wenn beispielsweise die zweiten Kommunikationsgeräte C1 - C3 eine Zykluszeit Z von 1 Minute und eine Kommunikationszeit K von 20 Sekunden haben, dann können von der Gerätesteuerung 2 nur maximal drei erste Kommunikationsgeräte P1 - P6 einem zweiten Kommunikationsgerät C1 - C3 zugeordnet werden. Die Zykluszeiten Z und die Kommunikationszeiten K sind anwendungsabhängig und können auch unterschiedlich für jeweils unterschiedliche erste und zweite Kommunikationsgeräte sein.

Die Gerätesteuerung 2 kann beispielsweise eine erste Schnittstelle 3 aufweisen, über die sie die Zykluszeiten Z und die Kommunikationszeiten K von einem Betreiber des Kommunikationssystems 1 empfängt und eine zweite Schnittstelle 5, über die sie diese an die zweiten Kommunikationsgeräte C1 - C3 mitteilt. Die beiden Schnittstellen 3 und 5 können auch durch eine einzige gemeinsame Schnittstelle realisiert sein.

In einem nächsten Schritt 15 ordnet die Gerätesteuerung 2 die identifizierten ersten Kommunikationsgeräte P1 - P6 den zweiten Kommunikationsgeräten C1 - C3 derart zu, dass diese lediglich denjenigen zweiten Kommunikationsgeräten zugeordnet werden, die Lebensdaten empfangen haben, wobei aber mehrfache (z.B. doppelte) Zuordnungen vermieden werden. Im Fall einer möglichen Zuordnung eines ersten Kommunikationsgerätes zu mehreren zweiten Kommunikationsgeräten erfolgt die Zuordnung zu demjenigen zweiten Kommunikationsgerät, das die größte Empfangsstärke E von Signalen mit den Lebensdaten ermittelt hat.

In dem Fall von FIG 1 könnte das erste Kommunikationsgerät P2 sowohl dem zweiten Kommunikationsgerät C1 als auch dem zweiten Kommunikationsgerät C2 zugeordnet werden. Da die Empfangsstärke E des ersten Kommunikationsgeräts P2 am zweiten Kommunikationsgerät C2 größer ist als am zweiten Kommunikationsgerät C1, wird es dem zweiten Kommunikationsgerät C2 zugeordnet. In ähnliche Weise wird das erste Kommunikationsgerät P4 aufgrund höherer Empfangsstärke dem zweiten Kommunikationsgerät C3 anstatt des zweiten Kommunikationsgeräts C2 zugeordnet.

In einem Schritt 16 prüft dann die Gerätesteuerung 2, ob einem zweiten Kommunikationsgerät C1 - C3 mehr als die maximale Anzahl von zuordenbaren ersten Kommunikationsgeräten P1 - P6 zugeordnet wurde.

Falls dies nicht der Fall ist (wie im Fall von FIG 1), ist die Zuordnung erfolgreich gewesen und die Gerätesteuerung 2 teilt den zweiten Kommunikationsgeräten in einem Schritt 17 über die Schnittstelle 3 die jeweils zugeordneten ersten Kommunikationsgeräte mit, hier die Teilmengen T1 - T3 der ersten Kommunikationsgeräte mit T1 = P1; T2 = P2,P3; T3 = P4,P5,P6.

Falls ein erstes Kommunikationsgerät aufgrund eines Erreichens der maximalen Anzahl von zuordenbaren ersten Kommunikationsgeräten keinem der zweiten Kommunikationsgeräte zuordenbar ist, gibt die Gerätesteuerung 2 über die Schnittstelle 3 eine Information (Fehlermeldung) F an den Betreiber des Kommunikationssystems 1 aus.

Falls die Prüfung in dem Schritt 16 jedoch ergibt, dass einem oder mehreren der zweiten Kommunikationsgeräte C1 - C3 mehr als die maximale Anzahl von zuordenbaren ersten Kommunikationsgeräten zugeordnet wurde, kommt es in einem Schritt 18 zu einer Umverteilung in der Zuordnung der ersten Kommunikationsgeräte. Hierzu prüft die Gerätesteuerung 2 auf das Vorliegen möglicher Mehrfachverbindungen eines ersten Kommunikationsgerätes zu zweiten Kommunikationsgeräten und verteilt eine über die maximale Anzahl hinausgehende Zahl von ersten Kommunikationsgeräten zu einem der anderen zweiten Kommunikationsgerät um, vorzugsweise zu einem, das noch nicht seine maximale Anzahl von zuordenbaren ersten Kommunikationsgeräten erreicht hat. Im Fall mehrerer potenziell umverteilbarer erster Kommunikationsgeräte mit Mehrfachverbindungen verteilt die Gerätesteuerung diejenigen ersten Kommunikationsgeräte zu anderen der zweiten Kommunikationsgerät um, die bei den anderen der zweiten Kommunikationsgeräte die höchsten Empfangsstärken aufweisen.

Es kommt dann zu einem Rücksprung zu Schritt 16, in dem die Gerätesteuerung 2 prüft, ob einem zweiten Kommunikationsgerät mehr als die maximale Anzahl von zuordenbaren ersten Kommunikationsgeräten zugeordnet wurde.

Falls dies nicht der Fall ist, ist die Zuordnung erfolgreich gewesen und die Gerätesteuerung 2 teilt den zweiten Kommunikationsgeräten in dem Schritt 17 über die Schnittstelle 3 die jeweils zugeordneten ersten Kommunikationsgeräte mit.

Falls die Prüfung in dem Schritt 16 jedoch ergibt, dass einem oder mehreren der zweiten Kommunikationsgeräte C1 - C3 mehr als die maximale Anzahl von zuordenbaren ersten Kommunikationsgeräten zugeordnet wurde, wird nochmals der Schritt 18 und darauffolgend der Schritt 16 durchlaufen. Diese Rekursion erfolgt so lange, bis entweder die Prüfung in dem Schritt 16 positiv war, d.h. bei keinem der zweiten Kommunikationsgeräte die maximale Anzahl zuordenbarer erster Kommunikationsgeräte erreicht oder überschritten ist, oder eine maximale Zahl von Rekursionen erreicht oder überschritten ist.

Wenn im Schritt 16 die maximale Zahl von Rekursionen erreicht oder überschritten ist und nicht alle identifizierten ersten Kommunikationsgeräte den zweiten Kommunikationsgeräten zugeordnet werden konnten, dann wird im Schritt 17 eine Information (Fehlermeldung) F an den Betreiber des Kommunikationssystems 1 ausgegeben.

Alternativ können von der Gerätesteuerung 2, beispielsweise durch einen Ein-/Ausgabedialog mit dem Betreiber des Kommunikationssystem, die Zykluszeiten Z vergrößert und/oder die Kommunikationszeiten K für ausgewählte oder sämtliche Kommunikationsgeräte reduziert werden, um Übertragungsdatenmengen zu reduzieren und dafür im Austausch die Zahl der pro zweitem Kommunikationsgerät zuordenbaren ersten Kommunikationsgeräte zu erhöhen, um noch nicht zugeordnete erste Kommunikationsgeräte noch den zweiten Kommunikationsgeräten zuzuordnen.

In einem letzten Schritt 19 stellen dann die zweiten Kommunikationsgeräte nacheinander zyklisch eine Kommunikation mit den jeweils zugeordneten ersten Kommunikationsgeräten her und es kommt zu dem vorstehend erläuterten Abruf der Messdaten.

FIG 3 zeigt nun das Kommunikationssystem 1 von FIG 1 nach erfolgter Zuordnung der ersten Kommunikationsgeräte zu den zweiten Kommunikationsgeräten. Kommunikationsverbindungen von zweiten Kommunikationsgeräten zu jeweils zugeordneten ersten Kommunikationsgeräten sind mit einer durchgezogenen Linie dargestellt. Zweite Kommunikationsgeräte, die in Reichweite eines ersten Kommunikationsgerätes sind, das dem zweiten Kommunikationsgerät aber nicht zugeordnet ist und zu dem es somit auch keine Verbindung herstellt, sind weiterhin mit einer strichlierten Linie dargestellt.

Wenn ein zweites Kommunikationsgerät C1 - C3 erfolgreich eine Verbindung zu einem der ersten Kommunikationsgeräte P1 - P6 hergestellt hat, sendet es einen Messbefehl an dieses erste Kommunikationsgerät und das erste Kommunikationsgerät bzw. der Sensor startet die Messung. Nach Abschluss der Messung sendet das erste Kommunikationsgerät die Messdaten M an das zweite Kommunikationsgerät. Das zweite Kommunikationsgerät empfängt die Messdaten M und beendet bzw. schließt dann die Verbindung zu dem ersten Kommunikationsgerät bzw. Sensor.

Jedes der zweiten Kommunikationsgeräte C1 - C3 stellt dabei nacheinander in zyklischen Wiederholungen, die durch die Zykluszeit Z charakterisiert sind, für die Kommunikationszeit K eine Kommunikationsverbindung mit den jeweils zugeordneten ersten Kommunikationsgeräten her.

FIG 4 zeigt nun ein Szenario, bei dem ein zusätzliches erstes Kommunikationsgerät P7 dem System 1 zugefügt wird. Dies führt zu einer Überprüfung der Zuordnungen der ersten Kommunikationsgeräte P1 - P6 zu den zweiten Kommunikationsgeräten C1 - C3 anhand des Verfahrensablaufes 10 von FIG 2. In der weiteren Beschreibung wird dabei zur Vereinfachung im Wesentlichen auf die zweiten Kommunikationsgeräte C2 und C3 sowie die ersten Kommunikationsgeräte P4 und P7 eingegangen.

Das erste Kommunikationsgerät P7 sendet Lebensdaten L (siehe Schritt 11 in FIG 2), die nur von dem zweiten Kommunikationsgerät C3 empfangen werden (siehe Schritt 12 in FIG 2). Das zweite Kommunikationsgerät C3 informiert die Gerätesteuerung 2 über das hinzugekommene erste Kommunikationsgerät P7 und die zugehörige Empfangsstärke E. Die Gerätesteuerung 2 lässt nun erneut die Schritte 16 - 19 durchlaufen.

In dem Schritt 16 stellt die Gerätesteuerung 2 fest, dass bei dem zweiten Kommunikationsgerät C3 die maximale Zahl von 3 zuordenbaren ersten Kommunikationsgeräten überschritten ist. Es wird deshalb mit dem Schritt 18 weiterverfahren, in dem die Gerätesteuerung 2 eine Umverteilung in der Zuordnung der ersten Kommunikationsgeräte vornimmt. Hierzu prüft die Gerätesteuerung auf das Vorliegen möglicher Mehrfachverbindungen der ersten Kommunikationsgeräte zu zweiten Kommunikationsgeräten. Hier sind für das erste Kommunikationsgerät P4 jeweils Verbindungen zu den zweiten Kommunikationsgeräten C2 und C3, d.h. eine Mehrfachverbindung, möglich. Die Gerätesteuerung 2 verteilt deshalb das erste Kommunikationsgerät P4 auf das zweite Kommunikationsgerät C2 um.

Es kommt dann zu einem Rücksprung zu Schritt 16, in dem die Gerätesteuerung 2 prüft, ob einem zweiten Kommunikationsgerät mehr als die maximale Anzahl von zuordenbaren ersten Kommunikationsgeräten zugeordnet wurde. Da das zweite Kommunikationsgerät C2 noch nicht seine maximale Anzahl zuordenbarer erster Kommunikationsgeräte überschritten hat, können abschließend noch die Verfahrensschritte 17 und 19 durchlaufen werden. FIG 4 zeigt den abschließenden Zustand des Kommunikationssystems 1.

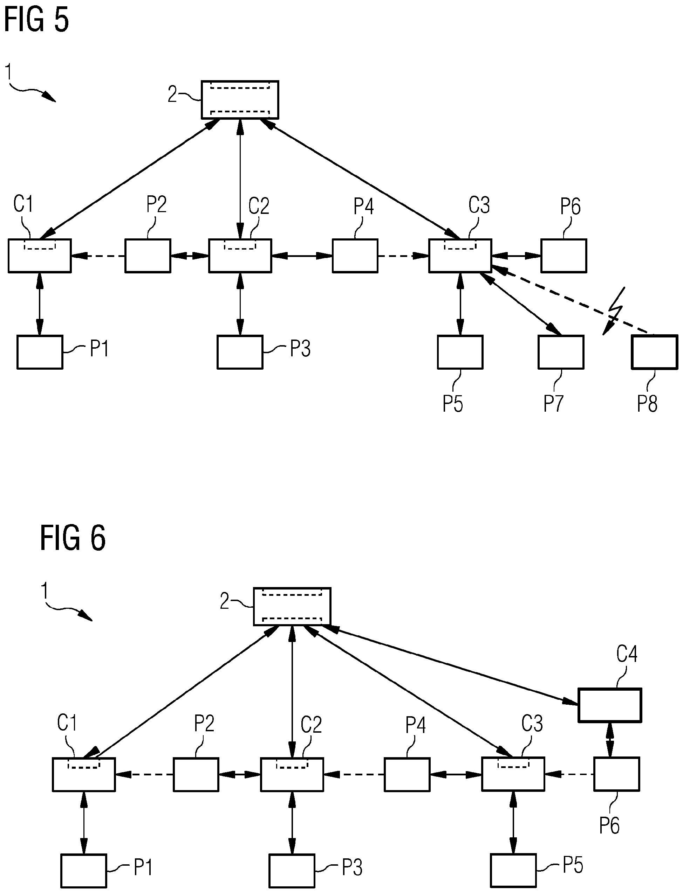

FIG 5 zeigt nun ein Szenario, bei dem ein weiteres erstes Kommunikationsgerät P8 dem System von FIG 4 zugefügt wird. Dieses sendet Lebensdaten L (siehe Schritt 11 in FIG 2), die nur von dem zweiten Kommunikationsgerät C3 empfangen werden (siehe Schritt 12 in FIG 2). Das zweite Kommunikationsgerät C3 informiert die Gerätesteuerung 2 über das hinzugekommene erste Kommunikationsgerät P8 und die zugehörige Empfangsstärke E. Die Gerätesteuerung 2 lässt nun erneut die Schritte 16 - 19 durchlaufen.

In dem Schritt 16 stellt die Gerätesteuerung 2 fest, dass bei dem zweiten Kommunikationsgerät C3 die maximale Zahl von 3 zuordenbaren ersten Kommunikationsgeräten überschritten ist.

Es wird deshalb mit dem Schritt 18 weiterverfahren, in dem die Gerätesteuerung 2 die Möglichkeit einer Umverteilung in der Zuordnung der ersten Kommunikationsgeräte prüft. Hierzu prüft die Gerätesteuerung 2 die aktuell dem zweiten Kommunikationsgerät C3 zugeordneten ersten Kommunikationsgeräte P5, P6, P7 sowie das zusätzliche ersten Kommunikationsgerät P8 auf das Vorliegen möglicher Verbindungen zu weiteren zweiten Kommunikationsgeräten. Hier sind für die Kommunikationsgeräte P5 - P8 aber keine weiteren zweiten Kommunikationsgeräte in Reichweite. Das neu hinzugekommene erste Kommunikationsgerät P8 kann folglich keinem der zweiten Kommunikationsgeräte C1 - C3 zugeordnet werden. In dem Schritt 17 wird deshalb eine Information (Fehlermeldung) F an den Betreiber des Kommunikationssystems 1 ausgegeben.

Alternativ könnte die Gerätesteuerung 2 in dem Schritt 18 die ersten Kommunikationsgeräte P5 - P8 auch in der Reihenfolge der Höhe der von dem zweiten Kommunikationsgerät C3 jeweils ermittelten Empfangsstärken E zuordnen. Es werden dem zweiten Kommunikationsgerät C3 also die drei ersten Kommunikationsgeräte P5 - P8 mit den höchsten Empfangsstärken E zugeordnet. Dies könnte dann zu einer Neuzuordnung der ersten Kommunikationsgeräte P5 - P8 zu dem zweiten Kommunikationsgerät C3 führen. Im Ergebnis würde dies hier zu keiner Änderung führen, da das erste Kommunikationsgerät P8 die niedrigste Empfangsstärke hat.

Alternativ könnte die Gerätesteuerung 2 im Schritt 18 auf Kosten der übertragbaren Datenmenge für das zweite Kommunikationsgerät C3 die Zykluszeit Z vergrößern und/oder die Kommunikationszeiten K verringern, um die Zahl der dem zweite Kommunikationsgerät C3 zuordenbaren ersten Kommunikationsgeräte zu erhöhen.

FIG 6 zeigt ein Szenario, bei dem ein weiteres zweites Kommunikationsgerät C4 dem System von FIG 3 zugefügt wird. Dies führt zu einer Überprüfung der Zuordnungen der ersten Kommunikationsgeräte P1 - P6 zu den zweiten Kommunikationsgeräten C1 - C4 anhand des Verfahrensablaufes 10 von FIG 2. In der weiteren Beschreibung wird dabei zur Vereinfachung im Wesentlichen auf die beiden zweiten Kommunikationsgeräte C3 und C4 und das erste Kommunikationsgerät P6 eingegangen.

In dem Schritt 12 von FIG 2 empfangen nun beide zweite Kommunikationsgeräte C3 und C4 die Lebensdaten L des ersten Kommunikationsgerätes P6. Das zweite Kommunikationsgerät C4 ermittelt dabei wegen des geringeren Abstandes eine größere Empfangsstärke als das zweite Kommunikationsgerät C3. Beide zweiten Kommunikationsgeräte C3 und C4 informieren die Gerätesteuerung 2 über das erste Kommunikationsgerät P6 und die zugehörige Empfangsstärke.

Die Gerätesteuerung 2 ermittelt in dem Schritt 14 nun auch noch für das zweite Kommunikationsgerät C4 aus dessen Zykluszeit Z und Kommunikationszeit K die maximale Anzahl von ersten Kommunikationsgeräten, zu denen während eines Zyklus eine Verbindung herstellbar ist.

In dem Schritt 15 ordnet die Gerätesteuerung 2 die identifizierten ersten Kommunikationsgeräte P1 - P6 den zweiten Kommunikationsgeräten C1 - C4 derart zu, dass diese lediglich zweiten Kommunikationsgeräten zugeordnet werden, die Lebensdaten empfangen haben, wobei aber mehrfache (z.B. doppelte) Zuordnungen vermieden werden. Da für das erste Kommunikationsgerät P6 eine Zuordnung zu beiden zweiten Kommunikationsgeräten C3 und C4 möglich ist, erfolgt die Zuordnung zu dem zweiten Kommunikationsgerät C4, da es eine größere Empfangsstärke von Signalen mit den Lebensdaten des ersten Kommunikationsgerätes P6 als das zweite Kommunikationsgerät C3 ermittelt hat.

Da die Prüfung im Schritt 16 ergibt, dass bei keinem der zweiten Kommunikationsgeräte C1 - C4 mehr als die maximale Anzahl von zuordenbaren ersten Kommunikationsgeräten zugeordnet wurde, teilt die Gerätesteuerung 2 den zweiten Kommunikationsgeräten C1 - C4 in dem Schritt 17 die jeweils zugeordneten ersten Kommunikationsgeräte mit. In dem Schritt 19 stellen dann die zweiten Kommunikationsgeräte C1 - C4 nacheinander zyklisch eine Kommunikation mit den jeweils zugeordneten ersten Kommunikationsgeräten P1 - P6 her. FIG 6 zeigt den abschließenden Zustand des Kommunikationssystems 1.

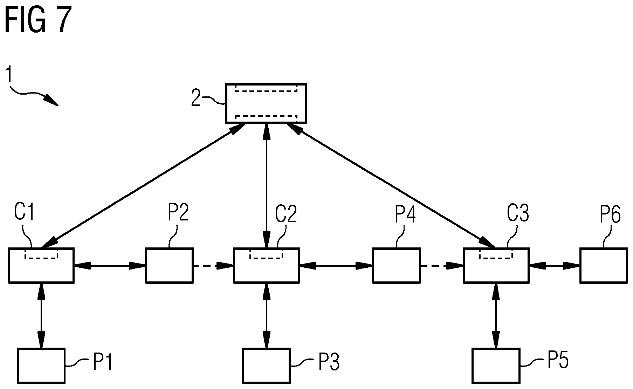

FIG 7 zeigt ein Szenario, bei dem in dem System von FIG 3 bei gleichbleibender Kommunikationszeit von 20s die Zykluszeit von 60 s auf 45 s verkleinert wird. Somit sind jedem der zweiten Kommunikationsgeräte C1 - C3 nur noch maximal zwei erste Kommunikationsgeräte P1 - P6 zuordenbar. Dies führt zu einer Überprüfung der Zuordnungen der ersten Kommunikationsgeräte P1 - P6 zu den zweiten Kommunikationsgeräten C1 - C3 anhand des Verfahrensablaufes 10 von FIG 2. In der weiteren Beschreibung wird dabei zur Vereinfachung im Wesentlichen auf die Unterschiede bei der Bearbeitung der Schritte 11 - 19 eingegangen.

In dem Schritt 14 ermittelt die Gerätesteuerung 2 aus der Zykluszeit Z und der Kommunikationszeit K, dass den zweiten Kommunikationsgeräten C1 - C3 nur noch maximal zwei erste Kommunikationsgeräte zuordenbar sind.

In dem Schritt 15 ordnet die Gerätesteuerung 2 die identifizierten ersten Kommunikationsgeräte P1 - P6 den zweiten Kommunikationsgeräten C1 - C3 derart zu, dass diese lediglich zweiten Kommunikationsgeräten zugeordnet werden, die Lebensdaten empfangen haben, wobei aber mehrfache Zuordnungen vermieden werden. Wenn eine Zuordnung zu mehreren zweiten Kommunikationsgeräten möglich ist, dann erfolgt eine Zuordnung zu demjenigen zweiten Kommunikationsgerät, das eine größere Empfangsstärke von Signalen mit den Lebensdaten des ersten Kommunikationsgerätes ermittelt hat. Hier erfolgt deshalb nun eine Zuordnung des ersten Gerätes P1 zu dem zweiten Gerät C1, der ersten Geräte P2 und P3 zu dem zweiten Gerät C2 und der ersten Geräte P4, P5, P6 zu dem zweiten Gerät C3.

In dem Schritt 16 stellt die die Gerätesteuerung 2 fest, dass bei dem zweiten Kommunikationsgerät C3 mehr als die maximale Anzahl von zuordenbaren ersten Kommunikationsgeräten zugeordnet wurde.

Es folgt deshalb der Schritt 18, in dem es zu einer Umverteilung in der Zuordnung der ersten Kommunikationsgeräte kommt. Hierzu prüft die Gerätesteuerung 2 auf das Vorliegen möglicher Mehrfachverbindungen der ersten Kommunikationsgeräte P4 - P6 zu zweiten Kommunikationsgeräten. Da lediglich das erste Kommunikationsgerät P4 auch eine Verbindung zu dem zweiten Kommunikationsgerät C2 hat, wird es nun dem zweiten Kommunikationsgerät C2 zugeordnet.

Bei dem Rücksprung zu Schritt 16 stellt die Gerätesteuerung 2 fest, dass nun dem zweiten Kommunikationsgerät C2 mehr als die maximale Anzahl von zuordenbaren ersten Kommunikationsgeräten zugeordnet wurde.

In dem erneuten Schritt 18 kommt es deshalb nochmal zu einer Umverteilung in der Zuordnung der ersten Kommunikationsgeräte. Hierzu prüft die Gerätesteuerung 2 auf das Vorliegen möglicher Mehrfachverbindungen der ersten Kommunikationsgeräte P2 - P4 zu zweiten Kommunikationsgeräten. Da lediglich das erste Kommunikationsgerät P2 auch eine Verbindung zu dem zweiten Kommunikationsgerät C1 hat, wird es nun dem zweiten Kommunikationsgerät C1 zugeordnet.

Somit kann dann in dem erneuten Schritt 16 von der Gerätesteuerung festgestellt werden, dass bei keinem zweiten Kommunikationsgerät mehr als die maximale Anzahl von zuordenbaren ersten Kommunikationsgeräten zugeordnet wurde. Abschließend kommt es dann noch zu einem Durchlaufen der Schritte 17 und 19. FIG 7 zeigt den abschließenden Zustand des Kommunikationssystems 1.

Anhand von FIG 2 wurde nur ein mögliches Beispiel für einen Verfahrensablauf bei der Zuordnung der Geräte in Hinblick auf ein Optimierungsziel erläutert. Daneben gibt es noch viele weitere mögliche Varianten und Vorgehensweisen, die im Rahmen der Erfindung liegen. Beispielsweise kann in dem Schritt 15 auch zuerst eine Zuordnung anhand der höchsten Empfangsstärken erfolgen. Falls hierdurch die maximale Zahl zuordenbarer erster Kommunikationsgeräte überschritten wird, werden in dem Schritt 18 diejenigen ersten Kommunikationsgeräte entfernt, die auch eine Verbindung zu einem anderen zweiten Kommunikationsgerät haben, und zwar vorzugsweise in der Reihenfolge der Höhe der Empfangsstärke an diesem anderen zweiten Kommunikationsgerät.

## Patentansprüche

1. Verfahren zum Betrieb eines Drahtloskommunikationssystems (1), insbesondere zur Übertragung von Messdaten (M), wobei das Drahtloskommunikationssystem (1) mehrere erste Kommunikationsgeräte (P1 - P6) und mehrere zweite Kommunikationsgeräte (Cl - C3) umfasst,
- wobei die zweiten Kommunikationsgeräte (Cl - C3) Empfangsstärken (E) von Signalen ermitteln, die sie von den ersten Kommunikationsgeräten (P1 - P6) empfangen,
- wobei eine Anzahl der ersten Kommunikationsgeräte (P1 - P6) einer Anzahl der zweiten Kommunikationsgeräte (Cl - C3) zugeordnet wird,
- wobei die zweiten Kommunikationsgeräte (Cl - C3) nacheinander in zyklischen Wiederholungen, die durch eine Zykluszeit (Z) charakterisiert sind, für eine Kommunikationszeit (K) eine Kommunikationsverbindung mit den ihnen zugeordneten ersten Kommunikationsgeräten (P1 - P6) herstellen,
- wobei die Zuordnung der ersten Kommunikationsgeräte (P1 - P6) zu den zweiten Kommunikationsgeräten (Cl - C3) in Abhängigkeit von den Empfangsstärken (E), den Zykluszeiten (Z) und den Kommunikationszeiten (K) erfolgt.

2. Verfahren nach Anspruch 1, wobei ein erstes Kommunikationsgerät (P1 - P6) nur genau einem einzigen zweiten Kommunikationsgerät (Cl - C3) zugeordnet wird.

3. Verfahren nach einem der vorhergehenden Ansprüche, wobei die Zuordnung derart erfolgt, dass eine maximale Anzahl der ersten Kommunikationsgeräte (P1 - P6) den zweiten Kommunikationsgeräten (Cl - C3) zugeordnet wird, wobei bei den zweiten Kommunikationsgeräten (Cl - C3) eine Summe der Kommunikationszeiten (K) mit den jeweils zugordneten ersten Kommunikationsgeräten (P1 - P6) innerhalb eines Zyklus nicht größer ist als deren jeweilige Zykluszeit (Z).

4. Verfahren nach einem der vorhergehenden Ansprüche, wobei bei einer möglichen Zuordnung eines der ersten Kommunikationsgeräte (P1 - P6) zu mehreren der zweiten Kommunikationsgeräte (Cl - C3) die Zuordnung zu demjenigen der zweiten Kommunikationsgeräte (C1- C3) erfolgt, welches die größte Empfangsstärke (E) der von dem ersten Kommunikationsgerät (P1 - P6) empfangenen Signale ermittelt.

5. Verfahren nach einem der vorhergehenden Ansprüche, wobei eine Überprüfung der Zuordnungen erfolgt, wenn sich die Anzahl der Kommunikationsgeräte (P1 - P6 bzw. C1 - C3) ändert.

6. Verfahren nach einem der vorhergehenden Ansprüche, wobei eine Überprüfung der Zuordnungen erfolgt, wenn sich eine Empfangsstärke (E) an einem der zweiten Kommunikationsgeräte (Cl - C3) ändert.

7. Verfahren nach einem der vorhergehenden Ansprüche, wobei eine Überprüfung der Zuordnungen erfolgt, wenn sich eine der Zykluszeiten (Z) und/oder eine der Kommunikationszeiten (K) ändert.

8. Verfahren nach einem der vorhergehenden Ansprüche, wobei eine Information (F) erzeugt wird, wenn eines der ersten Kommunikationsgeräte (P1 - P6) nicht zu einem der zweiten Kommunikationsgeräte (Cl - C3) zuordenbar ist.

9. Verfahren nach einem der vorhergehenden Ansprüche, wobei die Zuordnungen durch eine zentrale Gerätesteuerung (2) erfolgen.

10. Verfahren nach Anspruch 9, wobei die zentrale Gerätesteuerung (2) die ermittelten Empfangsstärken (E) von den zweiten Kommunikationsgeräten (Cl - C3) empfängt.

11. Verfahren nach Anspruch 9 oder 10, wobei die zentrale Gerätesteuerung (2) den zweiten Kommunikationsgeräten (Cl - C3) die jeweils zugeordneten ersten Kommunikationsgeräte (P1 - P6) mitteilt.

12. Verfahren nach einem der vorhergehenden Ansprüche, wobei das Drahtloskommunikationssystem (1) zur Übertragung von Messdaten (M) verwendet wird.

13. Verfahren nach einem der vorhergehenden Ansprüche, wobei die ersten Kommunikationsgeräte (P1 - P6) als Sensoren zur Erfassung von Messdaten (M) ausgebildet oder mit diesen gekoppelt sind.

14. Drahtloskommunikationssystem (1), insbesondere zur Übertragung von Messdaten (M), umfassend mehrere erste Kommunikationsgeräte (P1 - P6), mehrere zweite Kommunikationsgeräte (Cl - C3) und eine Gerätesteuerung (2),
- wobei die Gerätesteuerung (2) ausgebildet ist, eine Anzahl der ersten Kommunikationsgeräte (P1 - P6) einer Anzahl der zweiten Kommunikationsgeräte (Cl - C3) zuzuordnen, vorzugweise derart, dass ein erstes Kommunikationsgerät (P1 - P6) nur genau einem einzigen zweiten Kommunikationsgerät (Cl - C3) zugeordnet ist,
- wobei die zweiten Kommunikationsgeräte ausgebildet sind,
- nacheinander in zyklischen Wiederholungen, die durch eine Zykluszeit (Z) charakterisiert sind, für eine Kommunikationszeit (K) eine Kommunikationsverbindung mit den jeweils zugordneten ersten Kommunikationsgeräten (P1 - P6) herzustellen,
- Empfangsstärken (E) von Signalen zu ermitteln, die sie von den ersten Kommunikationsgeräten (P1 - P6) empfangen,
- wobei die Gerätesteuerung (2) weiterhin derart ausgebildet ist, dass die Zuordnung der ersten Kommunikationsgeräte (P1
- P6) zu den zweiten Kommunikationsgeräten (Cl - C3) in Abhängigkeit von den Empfangsstärken (E), den Zykluszeiten (Z) und den Kommunikationszeiten (K) erfolgt.

15. Gerätesteuerung (2) für ein Drahtloskommunikationssystem (1), insbesondere zur Übertragung von Messdaten (M), welches mehrere erste Kommunikationsgeräte (P1 - P6) und mehrere zweite Kommunikationsgeräte (Cl - C3) umfasst,
- wobei die zweiten Kommunikationsgeräte (Cl - C3) ausgebildet sind,
- nacheinander in zyklischen Wiederholungen, die durch eine Zykluszeit (Z) charakterisiert sind, für eine Kommunikationszeit (K) eine Kommunikationsverbindung mit ihnen zugeordneten ersten Kommunikationsgeräten (P1 - P6) herzustellen,
- Empfangsstärken (E) von Signalen zu ermitteln, die sie von den ersten Kommunikationsgeräten (P1 - P6) empfangen,
- wobei die Gerätesteuerung eine Schnittstelle (5) zur Kommunikation mit den zweiten Kommunikationsgeräten (Cl - C3) aufweist und ausgebildet ist,
- über die Schnittstelle (5) die Empfangsstärken (E) von den zweiten Kommunikationsgeräten (Cl - C3) zu empfangen,
- eine Anzahl der ersten Kommunikationsgeräte (P1 - P6) einer Anzahl der zweiten Kommunikationsgeräte (C1 - C3) zuzuordnen, vorzugweise derart, dass ein erstes Kommunikationsgerät (P1 - P6) nur genau einem einzigen zweiten Kommunikationsgerät (C1 - C3) zugeordnet ist,
- wobei die Zuordnung der ersten Kommunikationsgeräte (P1 - P6) zu den zweiten Kommunikationsgeräten (C1 - C3) in Abhängigkeit von den empfangenen Empfangsstärken (E), den Zykluszeiten (Z) und den Kommunikationszeiten (K) erfolgt,
- den zweiten Kommunikationsgeräten (C1 - C3) über die Schnittstelle eine Information über die ihnen jeweils zugeordneten ersten Kommunikationsgeräte (P1 - P6) auszugeben.

16. Kommunikationsgerät (C1 - C3) für ein Drahtloskommunikationssystem (1), insbesondere zur Übertragung von Messdaten (M),
- wobei es ausgebildet ist, Signale von anderen Kommunikationsgeräten (P1 - P6) zu empfangen und Empfangsstärken (E) dieser Signale zu ermitteln,
- und wobei es eine Schnittstelle (4) zur Ausgabe der Empfangsstärken (E) an eine Gerätesteuerung (2) und zum Empfang einer Zykluszeit (Z), einer Zuordnung von anderen Kommunikationsgeräten (P1 - P6) zu dem Kommunikationsgerät (Cl - C6) und zu Kommunikationszeiten (K) mit den anderen Kommunikationsgeräten (P1 - P6) aufweist,
und wobei es ausgebildet ist,
- nacheinander in zyklischen Wiederholungen, die durch eine Zykluszeit (Z) charakterisiert sind, für die Kommunikationszeit (K) eine Kommunikationsverbindung mit den zugeordneten anderen Kommunikationsgeräten (P1 - P6) herzustellen.
